# FASCICULE DE BREVET EUROPEEN

(11) **EP 3 598 068 B1**
(45) Date de publication et mention de la délivrance du brevet: **09.09.2026**
(21) Numéro de dépôt: 19185603.8
(22) Date de dépôt: 10.07.2019
(51) Int. Cl.: G01C 19/66

(54) **DISPOSITIF À RÉSONATEUR OPTIQUE ANNULAIRE**
RINGFÖRMIGE OPTISCHE RESONATORVORRICHTUNG
ANNULAR OPTICAL RESONATOR DEVICE

(30) Priorité: 19.07.2018 FR 1856692
(43) Date de publication de la demande: 22.01.2020
(73) Titulaire: STMicroelectronics S.r.l., 20864 Agrate Brianza (MB) (IT)
(72) Inventeur: FINCATO, Antonio, 28062 CAMERI, NOVARA (IT); TEMPORITI MILANI, Enrico Stefano, 27100 PAVIA (IT); ZUFFADA, Maurizio, 20143 MILAN (IT); SIMBULA, Angelica, 09072 CABRAS, ORISTANO (IT)
(74) Mandataire: Cabinet Beaumont

(56) Documents cités:
- US-A- 4 326 803
- US-A- 4 674 881
- US-A1- 2016 334 217

## Description

### Domaine technique

La présente description concerne de façon générale les dispositifs à résonateur optique annulaire, et plus particulièrement des gyroscopes comprenant un tel résonateur optique annulaire.

### Technique antérieure

On connaît des gyroscopes à résonateur optique annulaire. Dans de tels gyroscopes, lorsque le résonateur optique annulaire n'est pas en rotation autour de son axe et qu'un signal optique se propage dans le résonateur, le résonateur présente des longueurs d'onde de résonance, l'intervalle entre deux longueurs d'onde de résonance successives étant constant et couramment appelé intervalle spectral libre (FSR - free spectral range). Considérant une résonance d'ordre fixe, avec une longueur d'onde de résonance au repos λR, lorsque le résonateur optique annulaire est en rotation autour de son axe, un signal optique qui se propage dans le résonateur dans le même sens que la rotation subit une augmentation de la longueur d'onde de résonance par rapport à la longueur d'onde de résonance au repos λR, et un signal optique qui se propage dans le résonateur dans la direction opposée à la rotation subit une diminution de la longueur d'onde de résonance par rapport à la longueur d'onde au repos λR. La différence entre la longueur d'onde de résonance au repos λR et les longueurs d'onde de résonance en rotation dépend de la vitesse de rotation du résonateur, permettant de déterminer la vitesse de rotation du gyroscope. Des exemples de gyroscopes sont décrits dans les documents US 4674881 et US 4326803.

### Résumé de l'invention

Un mode de réalisation pallie tout ou partie des inconvénients des dispositifs à résonateur optique connus, et en particulier des dispositifs connus comprenant un résonateur optique annulaire tel qu'un guide d'onde annulaire résonnant.

Un mode de réalisation prévoit un gyroscope à guide d'onde annulaire résonnant dans lequel une vitesse de rotation est déterminée avec une plus grande précision que dans des gyroscopes à guide d'onde annulaire résonnant connus.

Un mode de réalisation prévoit un gyroscope à guide d'onde annulaire résonnant dans lequel certaines variations, telles que des variations de température, n'influencent pas le calcul de la vitesse de rotation.

Un mode de réalisation prévoit un gyroscope à guide d'onde annulaire résonnant dans lequel le bruit de mesure est réduit par rapport à celui de gyroscopes à guide d'onde annulaire résonnant connus.

Un mode de réalisation prévoit un gyroscope comprenant un résonateur optique comportant un premier guide d'onde annulaire, un deuxième guide d'onde couplé au premier guide d'onde et reliant un premier port du résonateur à un deuxième port du résonateur, et un troisième guide d'onde couplé au premier guide d'onde et reliant un troisième port du résonateur à un quatrième port du résonateur ; une source laser reliée au premier et deuxième ports ; un premier circuit électronique de calcul d'une première information représentative d'une différence de puissance entre un signal optique fourni par le deuxième port et un signal optique fourni par le troisième port quand un premier signal optique est fourni au premier port ; et un deuxième circuit électronique de calcul d'une deuxième information représentative d'une différence de puissance entre un signal optique fourni par le premier port et un signal optique fourni par le quatrième port quand un deuxième signal optique est fourni au deuxième port, le deuxième circuit déterminant, à partir de la deuxième information, un signal de commande de la longueur d'onde de la source laser et/ou de la longueur d'onde de résonance du résonateur de sorte que la deuxième information soit représentative d'une différence nulle.

Selon un mode de réalisation, quand le premier signal optique est fourni au premier port, le premier signal est transmis vers le deuxième port et vers le troisième port.

Selon un mode de réalisation, la source laser est à longueur d'onde réglable en fonction du signal de commande.

Selon un mode de réalisation, la longueur d'onde de résonance du résonateur est réglable en fonction du signal de commande.

Selon un mode de réalisation, le gyroscope comprend en outre au moins un modulateur optique.

Selon un mode de réalisation, le modulateur optique est configuré pour que des signaux optiques fournis aux premier et deuxième ports soient modulés à des fréquences différentes.

Selon un mode de réalisation, le premier circuit est configuré pour déterminer une vitesse angulaire à partir de la première information.

Un mode de réalisation prévoit un circuit intégré comprenant un gyroscope tel que défini ci-dessus.

Un mode de réalisation prévoit un procédé pour déterminer une vitesse de rotation d'un gyroscope tel que défini ci-dessus, dans lequel la vitesse de rotation est déterminée à partir de la première information.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de manière schématique, un mode de réalisation d'un dispositif à résonateur optique annulaire ;
la figure 2 illustre l'évolution, en fonction de la longueur d'onde, de coefficients de transmission de puissance de signaux optiques entre des ports du dispositif de la figure 1 ; et
la figure 3 représente, de manière schématique, un autre mode de réalisation d'un dispositif à résonateur optique annulaire.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, le fonctionnement de composants optiques et électro-optiques courants tels que des modulateurs, des commutateurs, des coupleurs, des séparateurs, des circulateurs, etc., n'a pas été décrit.

Sauf précision contraire, lorsque l'on fait référence à deux éléments (électriquement ou optiquement) connectés entre eux, cela signifie directement connectés sans éléments intermédiaires autres que des conducteurs ou des guides d'onde, et lorsque l'on fait référence à deux éléments (électriquement ou optiquement) reliés entre eux, cela signifie que ces deux éléments peuvent être connectés ou être électriquement ou optiquement reliés par l'intermédiaire d'un ou plusieurs autres éléments. En outre, lorsque l'on fait référence, sans autre précision, à deux éléments reliés ou connectés entre eux, cela signifie que ces deux éléments sont optiquement reliés ou connectés.

Sauf précision contraire, lorsque l'on fait référence à deux guides d'onde couplés entre eux, cela signifie que ces guides d'onde comprennent des portions suffisamment proches l'une de l'autre pour qu'un signal passe d'un guide d'onde à l'autre par couplage évanescent.

Sauf précision contraire, les expressions "environ", "approximativement", "sensiblement", et "de l'ordre de" signifient à 10 % près, de préférence à 5 % près.

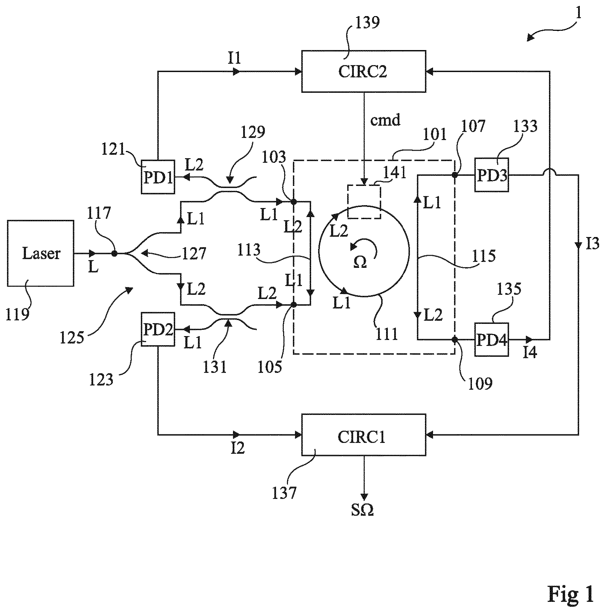

La figure 1 représente, de manière schématique, un mode de réalisation d'un dispositif 1, ici un gyroscope, à résonateur optique annulaire.

Le dispositif 1 comprend un résonateur optique 101 à quatre ports 103, 105, 107 et 109. Plus particulièrement, le résonateur 101 comprend un guide d'onde annulaire 111, un guide d'onde 113 et un guide d'onde 115. Le guide d'onde 113 est couplé au guide d'onde 111 et relie les ports 103 et 105 d'entrée/sortie du résonateur 101. Le guide d'onde 115 est couplé au guide d'onde 111 et relie les ports 107 et 109 de sortie du résonateur 101.

Les ports 103 et 105 sont reliés à un port 117 d'entrée du dispositif 1, le port 117 étant relié, de préférence connecté, à une source laser 119 (Laser) faisant ou non partie du dispositif 1. A titre d'exemple, la source laser 119 fournit un signal dont la longueur d'onde est dans l'infrarouge, par exemple comprise entre environ 750 nm et environ 3000 nm, étant entendu que le dispositif décrit peut être adapté pour fonctionner à d'autres longueurs d'onde.

Dans ce mode de réalisation, les ports 103 et 105 sont en outre reliés à des photodétecteurs respectifs 121 (PD1) et 123 (PD2), par exemple des photodiodes. Un réseau de connexion 125 permet de relier les ports 103 et 105 au port 117 et aux photodétecteurs respectifs 121 et 123.

Dans l'exemple de la figure 1, le réseau de connexion 125 comprend un séparateur optique 127 et deux coupleurs optiques 129 et 131, ici des coupleurs en X. L'entrée du séparateur optique 127 est reliée, de préférence connectée, au port 117. Une sortie du séparateur 127 est reliée au port 103 par le coupleur 129, le coupleur 129 reliant également le port 103 au photodétecteur 121. L'autre sortie du séparateur 127 est reliée au port 105 par le coupleur 131, le coupleur 131 reliant également le port 105 au photodétecteur 123.

Les ports 107 et 109 sont reliés, de préférence connectés, à des photodétecteurs respectifs 133 (PD3) et 135 (PD4), par exemple des photodiodes.

Le dispositif 1 comprend un circuit électronique 137 (CIRC1). Le circuit 137 est configuré pour calculer une information représentative d'une différence de puissance entre deux signaux de sortie du résonateur 101 fournis par les ports 105 et 107. Plus particulièrement, le circuit 137 calcule une différence entre des signaux de sortie des photodétecteurs 123 et 133, par exemple des courants respectivement I2 et I3, représentatifs des puissances optiques reçues par ces photodétecteurs. Le circuit 137 est donc relié électriquement, de préférence connecté électriquement, aux photodétecteurs 123 et 133, de manière à recevoir ces signaux de sortie I2, I3.

Le dispositif 1 comprend en outre un circuit électronique 139 (CIRC2). Le circuit 139 calcule une information représentative d'une différence de puissance entre deux signaux de sortie du résonateur 101 fournis par les ports 103 et 109. Plus particulièrement, le circuit 139 est configuré pour calculer la différence entre des signaux de sortie des photodétecteurs 121 et 135, par exemple des courants respectivement I1 et I4, représentatifs des puissances optiques reçues par ces photodétecteurs. Le circuit 139 est donc relié électriquement, de préférence connecté électriquement, aux photodétecteurs 121 et 135, de manière à recevoir ces signaux de sortie I1, I4. A titre d'exemple, le circuit 139 met en oeuvre une boucle de contre réaction prenant en entrée les signaux I1 et I4 et fournissant en sortie un signal de commande cmd, le calcul de la différence entre les signaux I1 et I4 étant mis en oeuvre dans la boucle de contre réaction.

Dans ce mode de réalisation, considérant une résonance d'ordre fixe, le résonateur 101 a une longueur d'onde de résonance réglable. La valeur de la longueur d'onde de résonance du résonateur 101, autrement dit la valeur de la longueur d'onde de résonance du guide d'onde 111, est déterminée par le signal de commande cmd fourni par le circuit 139. A titre d'exemple, le guide d'onde 111 comprend au moins un modulateur de phase 141 recevant le signal cmd, par exemple au moins un modulateur de phase à accumulation, injection ou déplétion, ou, de préférence, au moins un modulateur de phase thermique.

Dans une variante de réalisation non illustrée, la source laser 119 a une longueur d'onde de fonctionnement réglable. Dans cette variante, la valeur de longueur d'onde de fonctionnement de la source 119 est déterminée par un signal de commande fourni par le circuit 139. Cette variante de réalisation peut être mise en oeuvre en combinaison ou indépendamment du fait que, pour une résonance d'ordre fixe, la longueur d'onde de résonance du résonateur 101 soit réglable.

Dans le dispositif 1, lorsque la source 119 fournit un signal optique L au port 117, le réseau de connexion 125 fournit des signaux correspondants L1 et L2 aux ports respectifs 103 et 105, par l'intermédiaire des coupleurs respectifs 129 et 131 dans cet exemple. Une partie de la puissance du signal L1 est alors transmise du port 103 jusqu'au port 105 puis jusqu'au photodétecteur 123, par l'intermédiaire du coupleur 131 dans cet exemple. Une autre partie de la puissance du signal L1 est transmise du port 103 jusqu'au port 107 relié au photodétecteur 133, par l'intermédiaire du couplage entre les guides d'onde 113, 111 et 115. De manière symétrique, une partie de la puissance du signal L2 est transmise du port 105 jusqu'au port 103, puis jusqu'au photodétecteur 121, par l'intermédiaire du coupleur 129 dans cet exemple, une autre partie de la puissance du signal L2 étant transmise du port 105 jusqu'au port 109. Dans le guide d'onde 111, les signaux L1 et L2 se propagent alors en sens inverse l'un par rapport à l'autre.

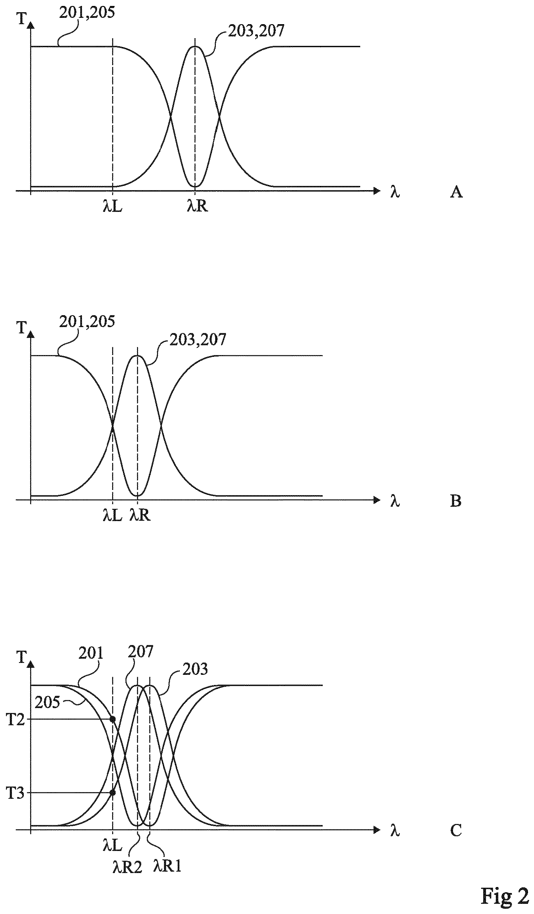

La figure 2 illustre, en fonction de la longueur d'onde λ (en abscisse) et à trois étapes A, B et C de fonctionnement, l'évolution de coefficients de transmission T (en ordonnée) de la puissance des signaux L1 et L2 entre différents ports du dispositif 1. Plus particulièrement, des courbes 201 et 203 illustrent l'évolution du coefficient T du signal L1, respectivement entre les ports 103 et 105 et entre les ports 103 et 107, des courbes 205 et 207 illustrant l'évolution du coefficient T du signal L2 respectivement entre les ports 105 et 103 et entre les ports 105 et 109.

A l'étape A, le dispositif 1 est dans un état où il n'est pas en rotation autour de l'axe du guide d'onde annulaire 111 et où, pour une résonance d'ordre fixe, une longueur d'onde de résonance λR du guide d'onde annulaire 111 n'est pas encore commandée par le circuit 139. La source laser 119 fournit au dispositif 1 un signal L de longueur d'onde λL et le guide d'onde annulaire 111 résonne à la longueur d'onde λR. Pour des signaux L1 et L2 dont on ferait varier la longueur d'onde, on constaterait que, à la longueur d'onde λR, la puissance du signal L1 transmise du port 103 au port 105 (courbe 201) et la puissance du signal L2 transmise du port 105 au port 103 (courbe 205) seraient minimales alors que la puissance du signal L1 transmise du port 103 au port 107 (courbe 203) et la puissance du signal L2 transmise du port 105 au port 109 (courbe 207) seraient maximales. En outre, plus on s'éloignerait de la longueur d'onde λR, plus ce phénomène s'inverserait. Du fait que le dispositif 1 n'est pas en rotation, les courbes 201 et 203 (signal L1) sont confondues avec les courbes respectivement 205 et 207 (signal L2).

A l'étape B, le circuit 139 fournit un signal de commande cmd au guide d'onde 111 de manière à modifier la longueur d'onde de résonance λR du guide d'onde 111. Plus particulièrement, le circuit 139 calcule la différence entre les signaux de sortie I1 et I4 des photodétecteurs 121 et 135. Cette différence ou information est représentative de la différence entre la puissance du signal L2 fourni par le port 103 et la puissance du signal L2 fourni par le port 109, donc la différence entre les courbes 205 et 207. Le circuit 139 est configuré pour déterminer, à partir de cette information, le signal cmd de sorte que, à la longueur d'onde λL des signaux L1 et L2, la puissance du signal L2 transmise au port 103 (courbe 205) soit sensiblement égale, de préférence égale, à la puissance du signal L2 transmise au port 109 (courbe 207). Cela revient à se placer au croisement des courbes 205 et 207 comme cela est représenté en figure 2, étape B. Du fait que le dispositif n'est pas en rotation, les courbes 201 et 203 (signal L1) restent confondues avec les courbes respectivement 205 et 207 (signal L2).

A l'étape C, le dispositif 1 est en rotation à une vitesse angulaire Ω (figure 1) par rapport à l'axe central du guide d'onde 111. L'effet Sagnac résultant de cette rotation entraîne que, pour le signal L1 qui circule dans le guide d'onde 111 dans le sens de rotation du guide d'onde 111, le guide d'onde 111 résonne à une longueur d'onde λR1 supérieure à la longueur d'onde λR de l'étape B, et, à l'inverse, pour le signal L2 qui circule dans le guide d'onde dans le sens inverse au sens de rotation du guide d'onde 111, le guide d'onde 111 résonne à une longueur d'onde λR2 inférieure à la longueur d'onde λR de l'étape B.

Ainsi, les courbes 201 et 203 se décalent par rapport aux courbes 205 et 207. Dans le même temps, la longueur d'onde de résonance λR2 du guide d'onde 111 est asservie par le circuit 139 de sorte que, à la longueur d'onde λL de la source laser 119, les courbes 205 et 207 se croisent. Le croisement des courbes 201 et 203 s'effectue alors au voisinage de la longueur d'onde λL, et, à la longueur d'onde λL, les courbes 201 et 203 présentent des pentes.

Le circuit 137 calcule la différence entre les signaux de sortie I2 et I3 des photodétecteurs 123 et 133. Cette différence ou information est représentative de la différence entre la puissance du signal L1 transmise au port 105 (coefficient T2, courbe 201) et la puissance du signal L1 transmise au port 107 (coefficient T3, courbe 203), ou, autrement dit de la différence entre les coefficients T2 et T3. La différence entre les coefficients T2 et T3 est sensiblement proportionnelle ou proportionnelle au décalage, dû à l'effet Sagnac, entre les courbes 201, 203 et les courbes 205, 207. La différence entre les coefficients T2 et T3 est donc sensiblement proportionnelle ou proportionnelle à la vitesse de rotation Ω du guide d'onde 111, donc du dispositif 1.

Le circuit 137 est configuré pour déduire de la différence entre les signaux I2 et I3 la valeur SΩ (figure 1) de la vitesse Ω, par exemple grâce à une table de correspondance avec des valeurs de vitesse de rotation, une telle table pouvant être déterminée lors d'une étape préalable d'étalonnage et étant par exemple stockée dans une mémoire statique (non représentée en figure 1) du circuit 137.

Un avantage de calculer la vitesse Ω à partir de différence entre les courants I2 et I4, en particulier au voisinage du croisement des courbes 201 et 203, est que le gain de détection d'une variation de la vitesse Ω est plus grand que si la vitesse Ω était directement calculée à partir de la différence entre les longueurs d'onde λR1 et λR2. Cela est d'autant plus vrai que le facteur de qualité du résonateur 101 est élevé, les pentes des courbes 201 et 203 augmentant avec le facteur de qualité.

Dans un dispositif où l'on détecterait les minimums des courants I1 et I2 pour mesurer la différence entre les longueurs d'onde λR1 et λR2, pour chaque courant I1 et I2 mesuré au niveau de sa valeur minimale, la part de courant d'obscurité serait importante par rapport à la part de courant photogénéré. Dans le dispositif 1, au voisinage du croisement des courbes 201 et 203, la part du courant d'obscurité dans chacun des courants I2 et I3 est faible par rapport à la part du courant photogénéré, par exemple au moins deux fois plus faible. La diminution de la part de courant d'obscurité dans un courant mesuré pour déterminer la vitesse Ω entraîne une augmentation de la précision avec laquelle est déterminée cette vitesse.

Un avantage d'asservir la longueur d'onde λR2 à partir de la différence entre les signaux de sortie de photodétecteurs 121 et 135 est que la différence entre les signaux de sortie des photodétecteurs 123 et 133, donc la vitesse Ω calculée à partir de cette différence, est insensible à des variations lentes par rapport au temps de mise à jour du signal cmd permettant cet asservissement, c'est-à-dire des variations à des fréquences inférieures à la bande passante de la boucle de contre réaction du circuit 139. Les variations de la température du dispositif 1, et en particulier de la température du guide d'onde 111, sont un exemple de variations lentes par rapport au temps de réaction du dispositif 1.

Le fonctionnement décrit ci-dessus peut être adapté au cas où le circuit 139 commande la longueur d'onde λL plutôt que la longueur d'onde de résonance λR2 du guide d'onde 111. Ce fonctionnement peut également être adapté au cas où le circuit 139 commande la longueur d'onde de résonance λR2 du guide d'onde 111 et la longueur d'onde λL de la source laser 119.

Dans une variante non illustrée, les signaux L1 et L2 fournis aux ports respectifs 103 et 105 sont modulés en puissance à des fréquences différentes, par exemple des fréquences de l'ordre d'une ou plusieurs centaines de kilohertz. La détection de la puissance du signal L1 reçue par chacun des photodétecteurs 123 et 133 est alors faite de manière synchrone par rapport à la fréquence de modulation du signal L1, la détection de la puissance du signal L2 reçue par chacun des photodétecteurs 121 et 135 étant faite de manière synchrone par rapport à la fréquence de modulation du signal L2. Cela permet de réduire, voire supprimer, le bruit de mesure. En particulier, cela permet de réduire, voire supprimer, dans les mesures de puissance du signal L1, le bruit lié à des réflexions parasites du signal L2 jusqu'aux photodétecteurs 123 et/ou 133, et dans les mesures de puissance du signal L2, le bruit lié à des réflexions parasites du signal L1 jusqu'aux photodétecteurs 121 et/ou 135. Il en résulte que la valeur SΩ de la vitesse Ω est calculée avec une plus grande précision.

A titre d'exemple, dans le dispositif 1, cette variante est mise en oeuvre en ajoutant un modulateur entre le séparateur 127 et le coupleur 129, et un modulateur entre le séparateur 127 et le coupleur 131, les modulateurs étant par exemple de type Mach-Zehnder ou à électro-absorption.

Dans d'autres variantes de réalisation du dispositif 1 décrit en relation avec la figure 1, le réseau de connexion 125 peut être modifié. En particulier, les coupleurs 129, 131 peuvent être mis en oeuvre avec des circulateurs optiques plutôt qu'avec des coupleurs en X. Un avantage des circulateurs optiques par rapport aux coupleurs en X est que les pertes de puissance et les réflexions parasites sont réduites.

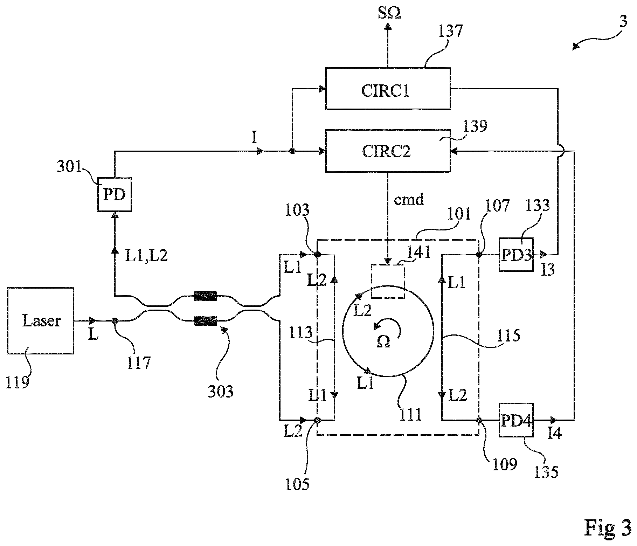

La figure 3 représente, de manière schématique, un autre mode de réalisation d'un dispositif 3, ici un gyroscope, à guide d'onde annulaire résonnant.

Le dispositif 3 comprend, comme le dispositif 1, le résonateur 101, les photodétecteurs 133 et 135 reliés, de préférence connectés, aux ports respectifs 107 et 109, le circuit 137 couplé électriquement, de préférence connecté électriquement, au photodétecteur 133, le circuit 139 couplé électriquement, de préférence connecté électriquement, au photodétecteur 135, et le port 117 relié, de préférence connecté, à la source laser 119.

Toutefois, à la différence du dispositif 1, dans le dispositif 3, les ports 103 et 105 du résonateur sont alternativement reliés à un même photodétecteur 301 (PD), par exemple une photodiode, par un commutateur optique 303, par exemple un modulateur de type Mach-Zehnder. Le port 117 est également alternativement relié aux ports 103 et 105 par le commutateur 303. Le commutateur 303 a donc le rôle de réseau de connexion. Les deux circuits 137 et 139 sont reliés électriquement, de préférence connectés électriquement, à la sortie du photodétecteur 301, de manière à recevoir le signal de sortie du photodétecteur, dans cet exemple un courant I représentatif de la puissance d'un signal optique reçu par le photodétecteur.

Le dispositif 3 fonctionne en alternant des premières et des deuxièmes phases de fonctionnement.

Dans une première phase de fonctionnement correspondant à un premier état du commutateur 303, le commutateur fournit, à partir du signal L, le signal L2 au port 105, et relie le port 103 au photodétecteur 301 de sorte que le signal L2 fourni par le port 103 soit transmis jusqu'au photodétecteur 301. Le signal de sortie I du photodétecteur 301 est alors représentatif de la puissance du signal L2 transmise du port 105 jusqu'au port 103. De manière similaire à ce qui a été décrit en relation avec la figure 2, le circuit 139 détermine alors le signal cmd à partir de la différence entre les signaux I et I4.

Dans une deuxième phase de fonctionnement correspondant à un deuxième état du commutateur 303, le commutateur fournit, à partir du signal L, le signal L1 au port 103, et relie le port 105 au photodétecteur 301 de sorte que le signal L1 fourni par le port 105 soit transmis jusqu'au photodétecteur 301. Le signal de sortie I du photodétecteur 301 est alors représentatif de la puissance du signal L1 transmise du port 103 jusqu'au port 105. De manière similaire à ce qui a été décrit en relation avec la figure 2, le circuit 137 détermine alors la valeur SΩ de la vitesse Ω à partir de la différence entre les signaux I et I3. Dans cette deuxième phase de fonctionnement, le circuit 139 est de préférence configuré pour maintenir le signal cmd à la valeur déterminée pendant la première phase précédente.

La fréquence des premières et deuxièmes phases est de préférence supérieure, par exemple au moins dix fois supérieure, à la fréquence de variations auxquelles est soumis le dispositif 3, par exemple des variations de température, de vitesse Ω, etc. La durée de chaque première phase et de chaque deuxième phase est par exemple comprise entre environ 1 µs et environ 1 ms. A titre d'exemple, l'alternance entre les premières et deuxièmes phases peut être commandée par un signal, par exemple périodique, ce signal étant alors fourni au commutateur 303 et aux circuits 137 et 139.

Du fait que, pendant chacune des premières et deuxièmes phases, un seul signal L1 ou L2 circule dans le dispositif 3, cela permet de supprimer une éventuelle influence du signal L2 sur les mesures réalisées à partir du signal L1, et inversement.

Par ailleurs, la vitesse Ω étant calculée de façon similaire dans les dispositifs 1 et 3, le dispositif 3 bénéficie des mêmes avantages que le dispositif 1 en ce qui concerne le calcul de la vitesse Ω.

En outre, comme dans le dispositif 1, dans une variante non illustrée de réalisation du dispositif 3, les signaux L1 et L2 sont modulés à des fréquences différentes. Dans ce cas, la mesure des courants I et I4 pendant les premières phases est effectuée de manière synchronisée avec la fréquence de modulation du signal L2, la mesure des courants I et I3 pendant les deuxièmes phases étant effectuée de manière synchronisée avec la fréquence de modulation du signal L1.

A titre d'exemple, cette variante de réalisation est mise en oeuvre en prévoyant un premier modulateur entre le commutateur 303 et le port 103 pour moduler la puissance du signal L1, et un deuxième modulateur entre le commutateur 303 et le port 105 pour moduler la puissance du signal L2. Cette configuration permet, en plus de la réduction, voire la suppression du bruit de mesure, d'éviter qu'une partie de la puissance du signal L ne revienne jusqu'à la source laser 119. De préférence, le premier modulateur n'est actif que lors des deuxièmes phases de fonctionnement, le deuxième modulateur n'étant actif que lors des premières phases de fonctionnement.

Dans la description faite ci-dessus, on entend par guide d'onde annulaire un guide d'onde fermé sur lui-même, par exemple un guide d'onde circulaire ou rectangulaire ou un guide d'onde en spirale. On notera que, pour une surface occupée identique, l'utilisation d'un guide d'onde 111 en spirale permet de réaliser un guide d'onde plus long que s'il avait été circulaire.

Dans un mode de réalisation préféré, le dispositif 1 ou 3 décrit ci-dessus est mis en oeuvre dans une même puce ou un même circuit intégré. Par exemple, une même couche de silicium comprend les guides d'onde, les composants photoniques et les composants électroniques (circuits CIRC1 et CIRC2) du dispositif.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art. En particulier, bien que les circuits 137 et 139 aient été représentés et décrits comme deux circuits électroniques distincts, les circuits 137 et 139 peuvent correspondre à un unique circuit électronique.

Par ailleurs, bien que cela n'ait pas été décrit, la valeur de la vitesse angulaire peut également être déduite de la différence entre un premier signal représentatif de la différence entre la puissance du signal L2 fourni par le port 103 et la puissance du signal L2 fourni par le port 109, et un deuxième signal représentatif de la différence entre la puissance du signal L1 fourni par le port 105 et la puissance du signal L1 fourni par le port 107, les premier et deuxième signaux étant par exemple fournis par les circuits respectifs CIRC2 et CIRC1.

Enfin, la mise en oeuvre pratique des modes de réalisation et variantes décrits est à la portée de l'homme du métier à partir des indications fonctionnelles données ci-dessus. En particulier, dans les modes de réalisation et variantes décrits, le résonateur 101, les composants optiques et optoélectroniques et les circuits 137 et 139 peuvent être réalisés sur une même puce, ou bien au moins une partie du résonateur peut être réalisée sur une puce différente de celle où sont réalisés les circuits 137 et 139 afin de bénéficier de technologies de fabrication différentes.

## Revendications

1. Gyroscope (1, 3) comprenant :
un résonateur optique (101) comportant un premier guide d'onde annulaire (111), un deuxième guide d'onde (113) couplé au premier guide d'onde et reliant un premier port (103) du résonateur à un deuxième port (105) du résonateur, et un troisième guide d'onde (115) couplé au premier guide d'onde et reliant un troisième port (107) du résonateur à un quatrième port (109) du résonateur ;
une source laser (119) reliée aux premier (103) et deuxième (105) ports ;
un premier circuit électronique (137) de calcul d'une première information représentative d'une différence de puissance entre un signal optique (L1) fourni par le deuxième port (105) et un signal optique fourni par le troisième port (107) quand un premier signal optique (L1) est fourni au premier port (103) ; et
un deuxième circuit électronique (139) de calcul d'une deuxième information représentative d'une différence de puissance entre un signal optique (L2) fourni par le premier port (103) et un signal optique fourni par le quatrième port (109) quand un deuxième signal optique (L2) est fourni au deuxième port (105), le deuxième circuit (139) déterminant, à partir de la deuxième information, un signal de commande (cmd) de la longueur d'onde (λL) de la source laser et/ou de la longueur d'onde de résonance du résonateur de sorte que la deuxième information soit représentative d'une différence nulle.

2. Gyroscope selon la revendication 1, dans lequel, quand le premier signal optique (L1) est fourni au premier port (103), le premier signal (L1) est transmis vers le deuxième port (105) et vers le troisième port (107).

3. Gyroscope selon la revendication 1 ou 2, dans lequel la source laser (119) est à longueur d'onde (λL) réglable en fonction du signal de commande.

4. Gyroscope selon l'une quelconque des revendications 1 à 3, dans lequel la longueur d'onde de résonance (λR2) du résonateur (101) est réglable en fonction du signal de commande (cmd).

5. Gyroscope selon l'une quelconque des revendications 1 à 4, comprenant en outre au moins un modulateur optique.

6. Gyroscope selon la revendication 5, dans lequel le modulateur optique est configuré pour que des signaux optiques (L1, L2) fournis aux premier (103) et deuxième (105) ports soient modulés à des fréquences différentes.

7. Gyroscope selon l'une quelconque des revendications 1 à 6, dans lequel le premier circuit (137) est configuré pour déterminer une vitesse angulaire à partir de la première information.

8. Circuit intégré comprenant un gyroscope selon l'une quelconque des revendications 1 à 7.

9. Procédé pour déterminer une vitesse de rotation d'un gyroscope selon l'une quelconque des revendications 1 à 7, dans lequel la vitesse de rotation est déterminée à partir de la première information.

## Patentansprüche

1. Gyroskop (1, 3), das Folgendes aufweist:
einen optischen Resonator (101) mit einem ersten Ring-Wellenleiter (111), einem zweiten Wellenleiter (113), der mit dem ersten Wellenleiter gekoppelt ist und einen ersten Anschluss (103) des Resonators mit einem zweiten Anschluss (105) des Resonators verbindet, und einem dritten Wellenleiter (115), der mit dem ersten Wellenleiter gekoppelt ist und einen dritten Anschluss (107) des Resonators mit einem vierten Anschluss (109) des Resonators verbindet;
eine Laserquelle (119), die mit dem ersten (103) und dem zweiten (105) Anschluss verbunden ist;
eine erste elektronische Schaltung (137) zum Berechnen einer ersten Information, die repräsentativ für eine Leistungsdifferenz ist zwischen einem optischen Signal (L1), das vom zweiten Anschluss (105) bereitgestellt wird, und einem optischen Signal, das vom dritten Anschluss (107) bereitgestellt wird, wenn ein erstes optisches Signal (L1) dem ersten Anschluss (103) zugeführt wird; und
eine zweite elektronische Schaltung (139) zum Berechnen einer zweiten Information, die repräsentativ für eine Leistungsdifferenz ist zwischen einem optischen Signal (L2), das vom ersten Anschluss (103) bereitgestellt wird, und einem optischen Signal, das vom vierten Anschluss (109) bereitgestellt wird, wenn ein zweites optisches Signal (L2) dem zweiten Anschluss (105) zugeführt wird, wobei die zweite Schaltung (139) basierend auf der zweiten Information ein Steuersignal (cmd) der Wellenlänge (λL) der Laserquelle und/oder der Resonanzwellenlänge (λR2) des Resonators (101) bestimmt, sodass die zweite Information repräsentativ für eine Nulldifferenz ist.

2. Gyroskop nach Anspruch 1, wobei, wenn das erste optische Signal (L1) dem ersten Anschluss (103) zugeführt wird, das erste Signal (L1) zum zweiten Anschluss (105) und zum dritten Anschluss (107) übertragen wird.

3. Gyroskop nach Anspruch 1 oder 2, wobei die Laserquelle (119) eine Wellenlänge (λL) aufweist, die nach dem Steuersignal einstellbar ist.

4. Gyroskop nach einem der Ansprüche 1 bis 3, wobei die Resonanzwellenlänge (λR2) des Resonators (101) nach dem Steuersignal (cmd) einstellbar ist.

5. Gyroskop nach einem der Ansprüche 1 bis 4, das ferner wenigstens einen optischen Modulator aufweist.

6. Gyroskop nach Anspruch 5, wobei der optische Modulator eingerichtet ist zum Modulieren optischer Signale (L1, L2), die dem ersten (103) und dem zweiten (105) Anschluss zugeführt werden, bei unterschiedlichen Frequenzen.

7. Gyroskop nach einem der Ansprüche 1 bis 6, wobei die erste Schaltung (137) eingerichtet ist zum Bestimmen einer Winkelgeschwindigkeit basierend auf der ersten Information.

8. Integrierte Schaltung, die ein Gyroskop nach einem der Ansprüche 1 bis 7 aufweist.

9. Verfahren zum Bestimmen einer Rotationsgeschwindigkeit eines Gyroskops nach einem der Ansprüche 1 bis 7, wobei die Rotationsgeschwindigkeit basierend auf der ersten Information bestimmt wird.

## Claims

1. A gyroscope (1, 3) comprising:
an optical resonator (101) having a first ring waveguide (111), a second waveguide (113) coupled to the first waveguide and linking a first port (103) of the resonator to a second port (105) of the resonator, and a third waveguide (115) coupled to the first waveguide and linking a third port (107) of the resonator to a fourth port (109) of the resonator;
a laser source (119) linked to the first (103) and second (105) ports;
a first electronic circuit (137) for calculating a first information representative of a power difference between an optical signal (L1) provided by the second port (105) and an optical signal provided by the third port (107) when a first optical signal (L1) is supplied to the first port (103); and
a second electronic circuit (139) for calculating a second information representative of a power difference between an optical signal (L2) provided by the first port (103) and an optical signal provided by the fourth port (109) when a second optical signal (L2) is supplied to the second port (105), the second circuit (139) determining, based on the second information, a control signal (cmd) of the wavelength (λL) of the laser source and/or of the resonance wavelength (λR2) of the resonator (101), so that the second information is representative of a zero difference.

2. The gyroscope of claim 1, wherein, when the first optical signal (L1) is supplied to the first port (103), the first signal (L1) is transmitted to the second port (105) and to the third port (107).

3. The gyroscope of claim 1 or 2, wherein the laser source (119) has a wavelength (λL) adjustable according to the control signal.

4. The gyroscope of any of claims 1 to 3, wherein the resonance wavelength (λR2) of the resonator (101) is adjustable according to the control signal (cmd).

5. The gyroscope of any of claims 1 to 4, further comprising at least one optical modulator.

6. The gyroscope of claim 5, wherein the optical modulator is configured so that optical signals (L1, L2) supplied to the first (103) and second (105) ports are modulated at different frequencies.

7. The gyroscope of any of claims 1 to 6, wherein the first circuit (137) is configured to determine an angular speed based on the first information.

8. An integrated circuit comprising a gyroscope according to any of claims 1 to 7.

9. A method for determining a rotation speed of a gyroscope according to any of claims 1 to 7, wherein the rotation speed is determined based on the first information.
